# EUROPEAN PATENT APPLICATION

(11) **EP 4 708 718 A2**
(43) Date of publication of application: **11.03.2026**
(21) Application number: 25222986.9
(22) Date of filing: 03.08.2021
(51) Int. Cl.: H04B 7/06

(54) **METHODS AND APPARATUSES FOR A TRP RELATED BEAM FAILURE DETECTION PROCEDURE AND A MOBILITY SCENARIO**

(62) Divisional of application: 21952190.3
(71) Applicant: Lenovo (Beijing) Limited, Beijing 100085 (CN)
(72) Inventor: WU, Lianhai, Biejing, 100028 (CN); YUE, Ran, Beijing, 100083 (CN); SHI, Jie, Beijing, 100085 (CN); XU, Min, Beijing, 100094 (CN); HU, Jie, Beijing, 100096 (CN)
(74) Representative: Openshaw & Co.

(57) **Abstract**

Embodiments of the present application relate to methods and apparatuses for a transmission reception point (TRP) related beam failure detection procedure and coexistence of a Layerl/Layer2 (L1/L2) mobility scenario and a Layer3 (L3) mobility scenario under a 3rd Generation Partnership Project (3GPP) 5G system or the like. According to an embodiment of the present application, a method can be performed by a user equipment (UE) and include: receiving, from a serving cell, configuration information related to two or more transmission reception points (TRPs) of the serving cell; detecting a beam failure of a TRP within the two or more TRPs; transmitting a beam failure recovery (BFR) request, wherein the BFR request includes information related to the TRP; before receiving a response for the BFR request from the serving cell, detecting a further beam failure of a further TRP within the two or more TRPs; and monitoring a physical downlink control channel (PDCCH) within a period.

## Description

### TECHNICAL FIELD

Embodiments of the present application generally relate to wireless communication technology, especially to methods and apparatuses for a transmission reception point (TRP) related beam failure detection procedure and coexistence of a Layer1/Layer2 (L1/L2) mobility scenario and a Layer3 (L3) mobility scenario.

### BACKGROUND

Currently, 3rd Generation Partnership Project (3GPP) RAN2 has agreed the common understanding for both Scenario 1 and Scenario 2 in RAN2#114 meeting. Scenario 1 refers to an inter-cell multi-TRP-like model, and Scenario 2 refers to L1/L2 mobility model (i.e., with a serving cell change).

In particular, Scenario 1 refers to an inter-cell multi-TRP-like model. In Scenario 1, a UE receives, from a serving cell, configuration(s) of synchronization signal block(s) (SSB(s)) of a TRP with a different physical layer identifier (PCID) for a beam measurement and configuration(s) needed to use radio resources for data transmission or data reception including resources for the different PCID. The UE performs a beam measurement for the TRP with the different PCID and reports a measurement result to the serving cell. Based on the above reports, transmission configuration indicator (TCI) state(s) associated with the TRP with the different PCID is activated from the serving cell (by L1/L2 signaling). A TCI may be a SSB or a channel state information reference signal (CSI-RS). The UE receives and transmits using a UE-dedicated channel on the TRP with the different PCID. The UE should be in coverage of a serving cell always, also for a multi-TRP case, e.g., the UE should use common channels broadcast control channel (BCCH), paging control channel (PCCH), and etc., from the serving cell.

Scenario 2 refers to a L1/L2 mobility model (i.e., with a serving cell change). In Scenario 2, a UE receives, from a serving cell, configuration of SSBs of the cell with a different PCID for beam measurement or serving cell change. The UE performs beam measurement for the cell with a different PCID and reports a measurement result to the serving cell. Serving cell configuration for the cell with other PCID is provided to the UE by RRC signaling. Based on the above reports, TCI state(s) for the cell with a different PCID is activated along with the serving cell change (by L1/L2 signaling). The UE changes the serving cell and starts receiving or starts transmitting using the pre-configured UE-dedicated channel and TCI states.

However, several issues related to Scenario 1 and Scenario 2 have not been discussed in 3GPP 5G technology yet and the corresponding solutions have not been specified. Embodiments of the subject application aim to provide solutions for both Scenario 1 and Scenario 2 in which a user equipment (UE) is configured with one or more candidate cells to solve the related issues in these two scenarios.

### SUMMARY

Some embodiments of the present application provide a method performed by a UE. The method includes: receiving, from a serving cell, configuration information related to two or more transmission reception points (TRPs) of the serving cell; detecting a beam failure of a TRP within the two or more TRPs; transmitting a beam failure recovery (BFR) request, wherein the BFR request includes information related to the TRP; before receiving a response for the BFR request from the serving cell, detecting a further beam failure of a further TRP within the two or more TRPs; and monitoring a physical downlink control channel (PDCCH) within a period.

Some embodiments of the present application also provide a UE. The UE includes a processor and a wireless transceiver coupled to the processor; and the processor is configured: to receive, via the wireless transceiver from a serving cell, configuration information related to two or more TRPs of the serving cell; to detect a beam failure of a TRP within the two or more TRPs; and to transmit a BFR request via the wireless transceiver, wherein the BFR request includes information related to the TRP; to detect a further beam failure of a further TRP within the two or more TRPs before receiving a response for the BFR request from the serving cell; and to monitor a PDCCH within a period.

Some embodiments of the present application provide a method performed by a UE. The method includes: receiving, from a serving cell, configuration information of a cell switch procedure related to one or more candidate cells, wherein the cell switch procedure is performed based on that a cell switch condition of the cell switch procedure is met or an activation indication of the cell switch procedure is received; and receiving, from the serving cell, one of: a normal handover command; a dual active protocol stack (DAPS) handover command; and configuration information regarding a conditional handover (CHO) procedure.

Some embodiments of the present application also provide a UE. The UE includes a processor and a wireless transceiver coupled to the processor; and the processor is configured: to receive, via the wireless transceiver from a serving cell, configuration information of a cell switch procedure related to one or more candidate cells, wherein the cell switch procedure is performed based on that a cell switch condition of the cell switch procedure is met or an activation indication of the cell switch procedure is received; to receive, via the wireless transceiver from the serving cell, one of: a normal handover command; a DAPS handover command; and configuration information regarding a CHO procedure.

Some embodiments of the present application also provide an apparatus for wireless communications. The apparatus includes: a non-transitory computer-readable medium having stored thereon computer-executable instructions; a receiving circuitry; a transmitting circuitry; and a processor coupled to the non-transitory computer-readable medium, the receiving circuitry and the transmitting circuitry, wherein the computer-executable instructions cause the processor to implement any of the above-mentioned methods performed by a UE.

Some embodiments of the present application provide a method performed by a network node (e.g., a base station (BS)). The method includes: transmitting, to a UE, configuration information of a cell switch procedure related to one or more candidate cells, wherein the cell switch procedure is performed based on that a cell switch condition of the cell switch procedure is met or an activation indication of the cell switch procedure is received; and transmitting, to the UE, one of: a normal handover command; a DAPS handover command; and configuration information regarding a CHO procedure.

Some embodiments of the present application also provide a network node (e.g., a BS). The network node includes a processor and a wireless transceiver coupled to the processor; and the processor is configured: to transmit, via the wireless transceiver to a UE, configuration information of a cell switch procedure related to one or more candidate cells, wherein the cell switch procedure is performed based on that a cell switch condition of the cell switch procedure is met or an activation indication of the cell switch procedure is received; and to transmit, via the wireless transceiver to the UE, one of: a normal handover command; a DAPS handover command; and configuration information regarding a CHO procedure.

Some embodiments of the present application also provide an apparatus for wireless communications. The apparatus includes: a non-transitory computer-readable medium having stored thereon computer-executable instructions; a receiving circuitry; a transmitting circuitry; and a processor coupled to the non-transitory computer-readable medium, the receiving circuitry and the transmitting circuitry, wherein the computer-executable instructions cause the processor to implement any of the above-mentioned method performed by a network node (e.g., a BS).

The details of one or more examples are set forth in the accompanying drawings and the descriptions below. Other features, objects, and advantages will be apparent from the descriptions and drawings, and from the claims.

### BRIEF DESCRIPTION OF THE DRAWINGS

In order to describe the manner in which advantages and features of the application can be obtained, a description of the application is rendered by reference to specific embodiments thereof, which are illustrated in the appended drawings. These drawings depict only example embodiments of the application and are not therefore to be considered limiting of its scope.
FIG. 1 illustrates scenarios on an inter-cell operation in accordance with some embodiments of the present application;
FIGS. 2 and 3 illustrate two exemplary format diagrams of a BFR MAC CE in accordance with 3GPP standard document TS38.321;
FIG. 4 illustrates a flow chart of a method for transmitting a BFR request in accordance with some embodiments of the present application;
FIG. 5 illustrates a flow chart of a method for receiving configuration information of a cell switch procedure in accordance with some embodiments of the present application;
FIG. 6 illustrates a flow chart of a method for transmitting configuration information of a cell switch procedure in accordance with some embodiments of the present application; and
FIG. 7 illustrates an exemplary block diagram of an apparatus according to some embodiments of the present application.

### DETAILED DESCRIPTION

The detailed description of the appended drawings is intended as a description of preferred embodiments of the present application and is not intended to represent the only form in which the present application may be practiced. It should be understood that the same or equivalent functions may be accomplished by different embodiments that are intended to be encompassed within the spirit and scope of the present application.

Reference will now be made in detail to some embodiments of the present application, examples of which are illustrated in the accompanying drawings. To facilitate understanding, embodiments are provided under specific network architecture and new service scenarios, such as 3GPP 5G, 3GPP LTE Release 8 and so on. It is contemplated that along with developments of network architectures and new service scenarios, all embodiments in the present application are also applicable to similar technical problems; and moreover, the terminologies recited in the present application may change, which should not affect the principle of the present application.

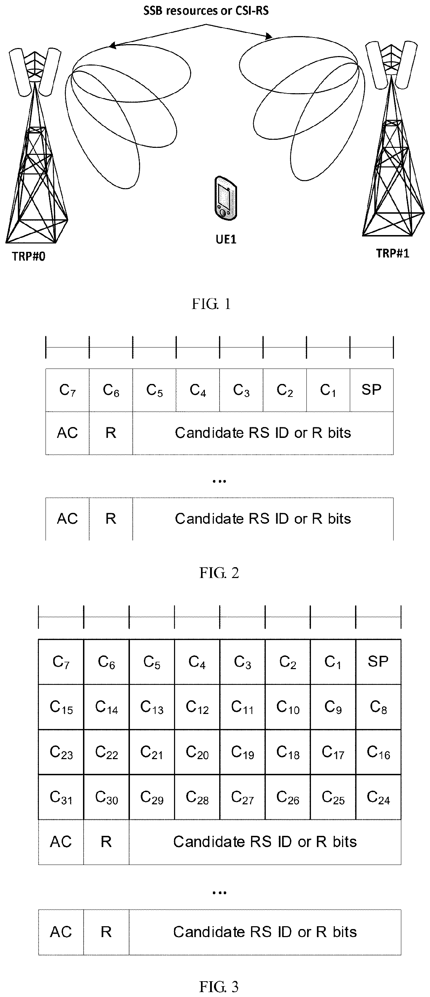

FIG. 1 illustrates scenarios on an inter-cell operation in accordance with some embodiments of the present application.

In some cases, UE1 may receive, from a serving cell, configuration(s) of SSB(s) or a CSI-RS of a TRP (e.g., TRP#0 and/or TRP#1) with a PCID for a beam measurement and resource configuration(s) for data transmission or data reception associated with the PCID. UE1 performs a beam measurement for the TRP with the PCID and reports a measurement result to the serving cell. Based on the above reports, TCI state(s) associated with the TRP with the PCID is activated from the serving cell (by L1 signaling or L2 signaling). A TCI may be a SSB or a CSI-RS. UE1 receives and transmits using a UE-dedicated channel on the TRP with the PCID. UE1 should be in coverage of a serving cell always, also for a multi-TRP case, e.g., UE1 should use BCCH, PCCH, etc., from the serving cell. As shown in FIG. 1, UE1 is served by TRP#0 and TRP#1. UE1 can receive data from TRP#0 and TRP#1 at the same time.

In some embodiments of the present application, UE1 as shown in FIG. 1 may include computing devices, such as desktop computers, laptop computers, personal digital assistants (PDAs), tablet computers, smart televisions (e.g., televisions connected to the Internet), set-top boxes, game consoles, security systems (including security cameras), vehicle on-board computers, network nodes (e.g., TRPs, routers, switches, and modems), or the like. In some other embodiments of the present application, UE1 may include a portable wireless communication device, a smart phone, a cellular telephone, a flip phone, a device having a subscriber identity module, a personal computer, a selective call receiving circuitry, or any other device that is capable of sending and receiving communication signals on a wireless network. In some other embodiments of the present application, UE1 may include wearable devices, such as smart watches, fitness bands, optical head-mounted displays, or the like. Moreover, UE1 may be referred to as a subscriber unit, a mobile, a mobile station, a user, a terminal, a mobile terminal, a wireless terminal, a fixed terminal, a subscriber station, a user terminal, or a device, or described using other terminology used in the art.

Currently, more details regarding a UE's behavior and a BS's behavior in Scenario 1 and Scenario 2 are unclear, several common issues have not been solved, and different solutions are needed in the different cases. Some embodiments of the subject application aim to provide solutions for a case of multi TRPs in one cell in Scenario 1. Some embodiments of the subject application study a UE's behaviors in the case that before receiving a response for a beam failure recovery request (BFRQ) of a TRP from a network node, the UE detects a further beam failure of a further TRP.

Some embodiments of the subject application aim to provide solutions for a case of coexistence of L1/L2 centric mobility and L3 mobility in Scenario 2. Some embodiments of the subject application aim to solve an issue for the coexistence of L1/L2 centric mobility and a CHO procedure. Some embodiments of the subject application aim to solve an issue for the coexistence of L1/L2 centric mobility and a DAPS handover (HO) procedure. More details regarding embodiments of the present application will be illustrated in the following text in combination with the appended drawings.

FIGS. 2 and 3 illustrate two exemplary format diagrams of a BFR MAC CE in accordance with 3GPP standard document TS38.321. In the embodiments of FIGS. 2 and 3, fields in a BFR MAC CE are defined as follows:
- SP (e.g., "SP" as shown in the eighth column, the first row of FIGS. 2 and 3, respectively): this field indicates beam failure detection for the SpCell of this MAC entity. The SP field is set to 1 to indicate that a beam failure is detected for a SpCell only when a BFR MAC CE is to be included into a MAC PDU as a part of a random access (RA) procedure; otherwise, the SP field is set to 0.
- Cᵢ(BFR MAC CE) (e.g., "C₁" to "C₇" as shown in FIG. 2; and "C₁" to "C₃₁" as shown in FIG. 3): this field indicates BFD and the presence of an octet containing the AC field for the SCell with *ServCellIndex i* as specified in 3GPP standard document TS38.331. The Cᵢ field set to 1 indicates that a beam failure is detected and the octet containing the AC field is presented for the SCell with *ServCellIndex* i*.* The Cᵢ field set to 0 indicates that the beam failure is not detected and octet containing the AC field is not presented for the SCell with *ServCellIndex* i*.* The octets containing the AC field are present in an ascending order based on the *ServCellIndex.*
- AC (e.g., "AC" as shown in the first column, the second row to the bottom row of FIG. 2; and "AC" as shown in the first column, the fifth row to the bottom row of FIG. 3): this field indicates the presence of the Candidate reference signal identifier (RS ID) field in this octet. If at least one of the SSBs with SS-RSRP above *rsrp-ThresholdBFR* amongst the SSBs in *candidateBeamRSSCellList* or the CSI-RSs with CSI-RSRP above *rsrp-ThresholdBFR* amongst the CSI-RSs in *candidateBeamRSSCellList* is available, the AC field is set to 1; otherwise, the AC field is set to 0. If the AC field set to 1, the Candidate RS ID field is present. If the AC field set to 0, R bits are present instead.
- Candidate RS ID (e.g., "Candidate RS ID" as shown in the second row to the bottom row of FIG. 2; and "Candidate RS ID" as shown in the fifth row to the bottom row of FIG. 3): this field is set to the index of an SSB with SS-RSRP above *rsrp-ThresholdBFR* amongst the SSBs in *candidateBeamRSSCellList* or to the index of a CSI-RS with CSI-RSRP above *rsrp-ThresholdBFR* amongst the CSI-RSs in *candidateBeamRSSCellList.* Index of an SSB or CSI-RS is the index of an entry in *candidateBeamRSSCellList* corresponding to the SSB or CSI-RS. Index 0 corresponds to the first entry in *candidateBeamRSSCellList,* and index 1 corresponds to the second entry in the list and so on. The length of this field is 6 bits.
- R (e.g., "R" as shown in the second row to the bottom row of FIG. 2; and "R" as shown in the fifth row to the bottom row of FIG. 3): this field is a reserved bit, and it is set to 0.

According to agreements of 3GPP standard document TS38.321, for a BFR procedure for a PSCell, if a beam failure instance indication has been received from a physical layer, a UE starts or restarts the *beamFailureDetectionTimer* and increment *BFI_COUNTER* by 1. If *BFI_COUNTER >= beamFailureInstanceMaxCount* and the serving cell is a PSCell or a PCell, the UE triggers a RA procedure on the SpCell. The UE selects a suitable beam to perform a BFR procedure (if the BS has provided dedicated RA resources for certain beams, those will be prioritized by the UE). Upon completing the RA procedure, the BFR procedure is considered as complete.

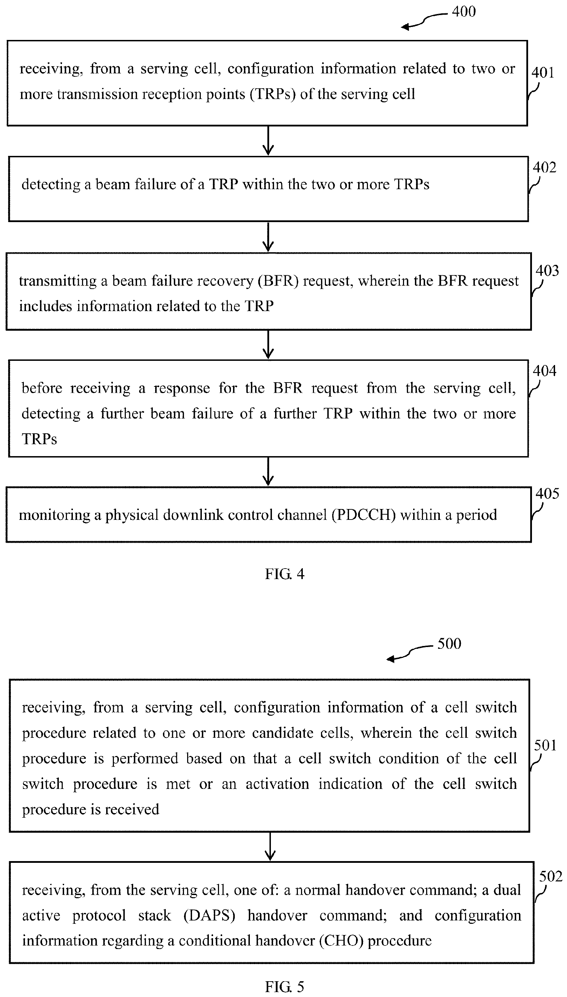

FIG. 4 illustrates a flow chart of a method for transmitting a BFR request in accordance with some embodiments of the present application. The exemplary method 400 in the embodiments of FIG. 4 may be performed by a UE, e.g., UE1 as shown and illustrated in FIG. 1. Although described with respect to a UE, it should be understood that other device(s) may be configured to perform the method as shown and illustrated in FIG. 4. Specific examples of the embodiments of FIG. 4 are described in Embodiments 1 and 2 as below.

In the exemplary method 400 as shown in FIG. 4, in operation 401, a UE receives, from a serving cell, configuration information related to two or more TRPs of the serving cell. In operation 402, the UE detects a beam failure of a TRP (e.g., TRP#0 as shown in FIG. 1) within the two or more TRPs. In operation 403, the UE transmits a BFR request, which may be named as 1^{st} BFR request. The 1^{st} BFR request includes information related to the TRP. In operation 404, before receiving a response for the 1^{st} BFR request from the serving cell, the UE detects a further beam failure of a further TRP (e.g., TRP#1 as shown in FIG. 1) within the two or more TRPs.

In operation 405, the UE monitors a PDCCH within a period. According to some embodiments, the period is associated with a time window in a time domain. The time window may start upon transmitting the 1^{st} BFR request or the 2^{nd} BFR request. The length of the time window may be configured by the serving cell.

According to some other embodiments, the period is associated with a timer. The period starts when the timer starts. The period ends when the timer expiries or when the timer stops. In an embodiment, the timer starts if:
(1) the UE transmits the 1^{st} BFR request, and detects the further beam failure; or
(2) transmitting the 1^{st} BFR request; or
(3) the UE detects the further beam failure, and transmits the further BFR request.

In an embodiment, the UE may stop the timer if the UE receives the response for the 1^{st} BFR request from the serving cell. In another embodiment, the UE may stop the timer if the UE receives a response for a further BFR request, which may be named as 2^{nd} BFR request, from the serving cell.

According to some embodiments, the serving cell is: a secondary cell (SCell); a primary cell (PCell); or a primary cell of a second cell group (PSCell).

In some embodiments, if the serving cell is a PCell or a PSCell, and if the UE detects the further beam failure of the PCell or the PSCell, the UE may trigger a further BFR procedure. The further BFR procedure includes transmitting the 2^{nd} BFR request. The UE may transmit the 2^{nd} BFR request. The 2^{nd} BFR request includes information related to the further TRP.

In an embodiment, the 1^{st} BFR request or the 2^{nd} BFR request may be a medium access control (MAC) control element (CE). The MAC CE includes a field indicating information per TRP associated with the two or more TRPs of the serving cell. In another embodiment, the 1^{st} BFR request or the 2^{nd} BFR request may be a scheduling request (SR).

In some embodiments, the UE may monitor a PDCCH within the period in operation 405 if:
(1) the 1^{st} BFR request includes information related to a candidate beam of the TRP (e.g., TRP#0 as shown in FIG. 1); or
(2) the 2^{nd} BFR request includes information related to a candidate beam of the further TRP (e.g., TRP#1 as shown in FIG. 1); or
(3) detecting the further beam failure and transmitting the 2^{nd} BFR request.

In some embodiments, if the serving cell is a SCell and if the UE detects the second beam failure of the SCell, the UE may trigger a further BFR procedure, which includes transmitting a 2^{nd} BFR request, and may transmit the 2^{nd} BFR request, which includes information related to the further TRP (e.g., TRP#1 as shown in FIG. 1). In an embodiment, the 1^{st} BFR request or the 2^{nd} BFR request may be a MAC CE. The MAC CE includes information associated with the SCell, e.g., a legacy cell-level BFR MAC CE as shown in FIGS. 2 and 3 specified in 3GPP standard document TS38.321.

Some embodiments of the present application adopt new formats of a BFR MAC CE associated with a TRP, which may also be named as "a TRP based BFR MAC CE", "a TRP BFR MAC CE", or the like.

Details described in all other embodiments of the present application (for example, details regarding TRP related beam failure detection and recovery procedures) are applicable for the embodiments of FIG. 4. Moreover, details described in the embodiments of FIG. 4 are applicable for all the embodiments of FIGS. 1-3 and 5-7.

In some embodiments of the present application, in Scenario#1 which refers to multiple TRPs in one cell, a specific BFR procedure related to two TRPs may be configured. After a beam failure for one TRP is detected, a UE may transmit a BFR request, e.g., a TRP based BFR MAC CE or a specific SR. Before receiving the response, a beam failure for the other TRP may be detected. However, an issue of what is a UE's behavior and a further issue of whether it is possible for UE to receive the response for the first TRP BFR MAC CE need to be solved. There may be following two cases in Scenario#1, i.e., Case A and Case B.

Case A: this case refers to a SpCell (a PCell or a PSCell). In Case A, a UE performs a RA procedure for a BFR purpose if beam failures for all TRPs of one cell (e.g., a PCell or a PSCell) are detected. Or, the UE needs to continue to monitor a PDCCH within a period if a new beam of the failed TRP is included in the TRP based BFR MAC CE. There may be following three options.
(1) Option A-1: when a beam failure for the 2^{nd} TRP within two TRPs of one cell is detected and a BFR request (e.g., a TRP based BFR MAC CE) for the 1^{st} TRP within two TRPs of the cell has been transmitted, a UE continues to monitor a PDCCH within a period (e.g., a time window or one timer). Once the time window is passed or the timer expires, the UE performs a RACH procedure based on configuration of a BFR procedure for the cell.
   1) In an embodiment, if a new beam of the failed TRP is included in the TRP based BFR MAC CE, the UE may continue to monitor a PDCCH within a period (e.g., a time window or one timer). Otherwise, the UE may perform a RACH procedure.
(2) Option A-2: if the elapsed time since the latest transmission of a TRP based BFR MAC CE is greater than one threshold, and a beam failure for the 2^{nd} TRP is detected, the UE declares a cell-level beam failure or the UE performs a RACH procedure.
(3) Option A-3: the UE transmits the TRP based BFR MAC CE via a SCell after the beam failure for the 2^{nd} TRP is detected. After the UE transmits the TRP based BFR MAC CE via the SCell, one timer is started. If the UE receives a response from a BS (e.g., a gNB), the UE stops the timer. If the timer expires, the UE performs a RA procedure for a BFR purpose.

Case B: this case refers to a SCell. In Case B, a beam failure for the 1^{st} TRP within two TRPs is detected on a SCell. A UE transmits a BFR request, e.g., a TRP based BFR MAC CE or a specific SR via a PCell or the SCell after the beam failure for the 1^{st} TRP on the SCell is detected. Before receiving a response for the BFR request, a beam failure for the 2^{nd} TRP on the SCell is detected. The UE may transmit a TRP based BFR MAC CE again, e.g., a further TRP based BFR MAC CE. Information regarding both of two failed TRPs or information regarding only the 2^{nd} failed TRP may be included in the further TRP based BFR MAC CE. For instance, the further TRP based BFR MAC CE may be a legacy BFR MAC CE as shown in FIGS. 2 and 3 or a new format of a TRP based BFR MAC CE with a field related to TRP information.

The following texts describe specific Embodiments 1 and 2 of the methods as shown and illustrated in FIG. 4. According to Embodiments 1 and 2, a UE and a BS may perform following operations. The UE may be UE1 as shown and illustrated in FIG. 1.

Embodiment 1: this embodiment refers to Case A, i.e., a solution for a SpCell (a PCell or a PSCell).
(1) Step 1: A UE accesses a network, e.g., a PCell. The serving cell is a SpCell (a PCell or a PSCell).
(2) Step 2: The network, e.g., the PCell, transmits configuration information to the UE.
   - Two TRPs for the serving cell are configured for the UE, e.g., TRP#0 and TRP#1.
   - A beam failure detection reference signal (BFD-RS) set is configured for each TRP. Each TRP is associated with a BFD-RS set. For example, BFD-RS set#0 is associated with TRP#0 and BFD-RS set#1 is associated with TRP#1, respectively.
   - Independent configuration of a new beam identification RS (NBI-RS) set is per TRP, if NBI-RS set per TRP is configured, e.g., NBI-RS set#0 and NBI-RS set#1.
   - A combination of BFD counter#0 and timer#0 in the MAC layer is configured for TRP#0. A combination of BFD counter#1 and timer#1 in the MAC layer is configured for TRP#1.
   - One TRP may be identified by one CORESET pool besides a BFD-RS set. For example, CORESET pool#0 is the TRP#0.
(3) Step 3: The UE receives the configuration information from the network, e.g., the PCell.
(4) Step 4: If a beam failure instance indication associated with TRP#0 has been received by the UE from a physical layer, the MAC entity of the UE shall for each serving cell starts or restarts a timer for a beam failure detection associated with TRP#0, with an increment of *COUNTER* associated with TRP#0 by 1.
   - *COUNTER* (per TRP) is a counter for the beam failure instance indication which is initially set to 0.
(5) Step 5: If *COUNTER* for one TRP (e.g., TRP#0) >= the maximum count for the beam failure instance and if the serving cell is the SpCell, the UE triggers a 1^{st} BFR request for this TRP, which may also be named as 1^{st} failed TRP or the like.
   - The UE generates a TRP based BFR MAC CE triggered by detecting a beam failure of the 1^{st} failed TRP.
(6) Step 6: The UE transmits the 1^{st} BFR request for the 1^{st} failed TRP.
(7) Step 7: The UE may detect a beam failure of a 2^{nd} TRP (e.g., TRP#1) before receiving a response to transmitting the 1^{st} BFR request for the 1^{st} failed TRP.
   - (Optionally) The UE triggers a BFR procedure for the 2^{nd} TRP. The UE may transmit a 2^{nd} BFR request, e.g., a TRP based BFR MAC CE. In an embodiment, the UE may adopt the abovementioned Option A-3.
   - In an embodiment, if the 1^{st} BFR request is transmitted while the 2^{nd} BFR request is not transmitted, a new beam associated with the 1^{st} failed TRP may be included in the transmitted 1^{st} BFR request.
   - In another embodiment, if both the 1^{st} BFR request and the 2^{nd} BFR request are transmitted, a new beam associated with the 1^{st} failed TRP may be included in the transmitted 1^{st} BFR request, and/or a new beam associated with the 2^{nd} failed TRP may be included in the transmitted 2^{nd} BFR request.
(8) Step 8: The UE can monitor a PDCCH within a period, if a new beam associated with the failed TRP is included in the transmitted BFR request.
   - adopting the abovementioned Option A-1
   - adopting the abovementioned Option A-2
   - adopting the abovementioned Option A-3
(9) Step 9: If a response can be received within a period, the UE considers that the BFR procedureis successful. If a response is not received within a period, the UE performs a RA on the corresponding PCell or PSCell.

Embodiment 2: this embodiment refers to Case B, i.e., a solution for a SCell.
(1) Step 1: A UE accesses a network, e.g., a PCell. The serving cell is a SCell.
(2) Step 2: The network, e.g., the PCell, transmits configuration information to the UE.
   - Two TRPs for the serving cell are configured, e.g., TRP#0 and TRP#1.
   - A BFD-RS set is configured for each TRP. Each TRP is associated with a BFD-RS set. For example, BFD-RS set#0 and BFD-RS set#1 are associated with TRP#0 and TRP#1, respectively.
   - The independent configuration of a new beam identification RS (NBI-RS) set is per TRP if a NBI-RS set per TRP is configured, e.g., NBI-RS set#0 and NBI-RS set#1.
   - A combination of BFD counter#0 and timer#0 in the MAC layer is configured for TRP#0. A combination of BFD counter#1 and timer#1 in the MAC layer is configured for TRP#1.
   - One TRP may be identified by one CORESET pool besides a BFD-RS set. For example, CORESET pool#0 is the TRP#0.
(3) Step 3: The UE receives the configuration information from the network, e.g., the PCell.
(4) Step 4: If a beam failure instance indication associated with TRP#0 of the SCell has been received by the UE from a physical layer, the MAC entity of the UE shall for each serving cell starts or restarts a timer for a beam failure detection associated with TRP#0, with an increment of *COUNTER* associated with TRP#0 by 1.
   - *COUNTER* (per TRP) is a counter for the beam failure instance indication which is initially set to 0.
(5) Step 5: If *COUNTER* for TRP#0 >= the maximum count for the beam failure instance and if the serving cell is the SCell, the UE triggers a 1^{st} BFR request for this TRP, i.e., the 1^{st} failed TRP.
   - The UE generates a TRP based BFR MAC CE triggered by detecting a beam failure of the 1^{st} failed TRP.
(6) Step 6: The UE transmits the 1^{st} BFR request for the 1^{st} failed TRP.
(7) Step 7: The UE may detect a beam failure of a 2^{nd} TRP before receiving a response to transmitting the 1^{st} BFR request for the 1^{st} failed TRP.
(8) Step 8: The UE triggers a BFR procedure for the 2^{nd} TRP.
(9) Step 9: The UE transmits a 2^{nd} BFR request for the 2^{nd} TRP.
   - The UE can transmit this BFR request in: a legacy cell-level BFR MAC CE as shown in FIGS. 2 and 3; or a new format of a TRP based BFR MAC CE with a field related to TRP information.

FIG. 5 illustrates a flow chart of a method for receiving configuration information of a cell switch procedure in accordance with some embodiments of the present application. The exemplary method 500 in the embodiments of FIG. 5 may be performed by a UE, e.g., UE1 as shown and illustrated in FIG. 1. Although described with respect to a UE, it should be understood that other device(s) may be configured to perform the method as shown and illustrated in FIG. 5. Specific examples of the embodiments of FIG. 5 are described in Embodiments 3-5 as below.

In the exemplary method 500 as shown in FIG. 5, in operation 501, a UE receives, from a serving cell, configuration information of a cell switch procedure related to one or more candidate cells. The cell switch procedure is performed based on that a cell switch condition of the cell switch procedure is met or an activation indication of the cell switch procedure is received.

In operation 502, the UE receives, from the serving cell, one of: a normal handover command; a DAPS handover command; and configuration information regarding a CHO procedure. In some embodiments, the normal handover command, the DAPS handover command, and/or the configuration information regarding the CHO procedure are related to a further candidate cell. For example, the further candidate cell may belong to the one or more candidate cells in operation 501 or may be a cell different from the one or more candidate cells.

According to some embodiments, a physical layer or a MAC layer of the UE receives the activation indication of the cell switch procedure from the serving cell. In an embodiment, the activation indication of the cell switch procedure includes a PCID of a candidate cell within the one or more candidate cells. In a further embodiment, the activation indication of the cell switch procedure includes an index of the candidate cell, wherein the index is associated with the PCID of the candidate cell or a cell global identifier (CGI) of the candidate cell.

In some embodiments, if the physical layer or the MAC layer of the UE receives the activation indication of the cell switch procedure and if the UE receives the configuration information regarding the CHO procedure, the physical layer or the MAC layer of the UE may indicate the received activation indication to a RRC layer of the UE.

In some embodiments, after the RRC layer of the UE receives the activation indication of the cell switch procedure from the physical layer or the MAC layer of the UE, the RRC layer of the UE may stop an evaluation of the condition of the CHO procedure and not trigger the CHO procedure. If the condition of the CHO procedure is met, the UE may perform the cell switch procedure in priority, or the UE may select a candidate cell with a best channel quality from the cell switch procedure and the CHO procedure for cell switch.

According to some embodiments, receiving a radio resource control (RRC) reconfiguration message from the serving cell. The RRC reconfiguration message includes an indication to indicate that the RRC reconfiguration message can be applied after a physical layer or a MAC layer of the UE receives the activation indication from the serving cell. In an embodiment, if the UE receives the RRC reconfiguration message, the UE may check compliance of the received RRC reconfiguration message. For example, if the RRC layer of the UE is not compliant with the RRC reconfiguration message, the UE may report a compliance failure to the serving cell.

In some embodiments, if the cell switch condition is met and if the UE receives the configuration information regarding the CHO procedure, a physical layer or a MAC layer of the UE may transmit an indication of meeting the cell switch condition to a RRC layer of the UE. In an embodiment, after the RRC layer of the UE receives this indication, if a CHO condition of the CHO procedure is not met, the RRC layer of the UE may stop an evaluation of the CHO condition and not trigger the CHO procedure. Otherwise, if the CHO condition is met, the UE may perform the cell switch procedure in priority, or the UE may switch to a candidate cell with a best channel quality via the cell switch procedure and the CHO procedure.

According to some embodiments, if the UE receives the DAPS handover command, the UE may perform a DAPS handover procedure. A RRC layer of the UE may transmit, to a physical layer or a MAC layer of the UE, an indication of performing the DAPS handover procedure. In an embodiment, after the physical layer or the MAC layer of the UE receives this indication, the physical layer or the MAC layer of the UE may stop an evaluation of the cell switch condition. In a further embodiment, after the physical layer or the MAC layer of the UE receives this indication, the UE may continue the evaluation of the cell switch condition and not trigger the cell switch procedure when meeting the cell switch condition.

Details described in all other embodiments of the present application (for example, details regarding TRP related beam failure detection and recovery procedures) are applicable for the embodiments of FIG. 5. Moreover, details described in the embodiments of FIG. 5 are applicable for all the embodiments of FIGS. 1-4, 6 and 7.

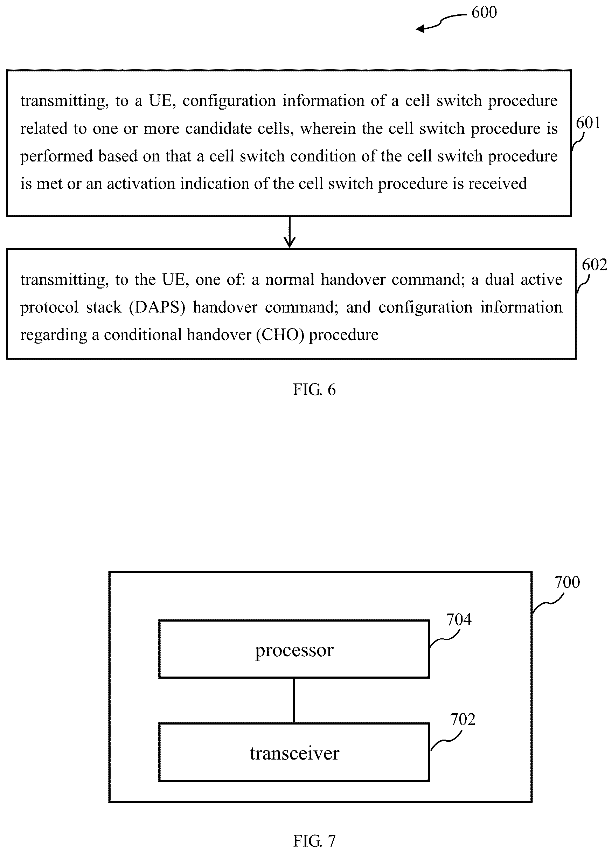

FIG. 6 illustrates a flow chart of a method for transmitting configuration information of a cell switch procedure in accordance with some embodiments of the present application. The exemplary method 600 in the embodiments of FIG. 6 may be performed by a network node, e.g., a BS. Although described with respect to a network node, it should be understood that other device(s) may be configured to perform the method as shown and illustrated in FIG. 6. Specific examples of the embodiments of FIG. 6 are described in Embodiments 3-5 as below.

In the exemplary method 600 as shown in FIG. 6, in operation 601, a network node (e.g., a BS) transmits, to a UE (e.g., UE1 as shown and illustrated in FIG. 1), configuration information of a cell switch procedure related to one or more candidate cells. The cell switch procedure is performed based on: a cell switch condition of the cell switch procedure is met; or an activation indication of the cell switch procedure is received.

In operation 602, the network node transmits, to the UE, a normal handover command or a DAPS handover command or configuration information regarding a CHO procedure. According to some embodiments, the normal handover command, the DAPS handover command, and/or the configuration information regarding the CHO procedure are related to a further candidate cell. For example, the further candidate cell may belong to the one or more candidate cells in operation 601 or may be a cell different from the one or more candidate cells.

In some embodiments, a physical layer or a MAC layer of the network node transmits, to the UE, an activation indication for a candidate cell within the one or more candidate cells. The activation indication may include: (1) a physical layer identifier (PCID) of a candidate cell within the one or more candidate cells; or (2) an index of the candidate cell, wherein the index is associated with the PCID of the candidate cell or a CGI of the candidate cell.

In some embodiments, the network node transmits a RRC reconfiguration message to the UE. The RRC reconfiguration message may include an indication to indicate that the RRC reconfiguration message can be applied after a physical layer or a MAC layer of the UE receives the activation indication from the network node. In an embodiment, the network node may receive, from the UE, a compliance failure between a RRC layer of the UE and the RRC reconfiguration message.

According to some embodiments, if a RRC layer of the network node transmits the DAPS handover command, the RRC layer of the network node may further transmit, to a physical layer or a MAC layer of the network node, an indication of transmitting the DAPS handover command. In some embodiments, if the physical layer or the MAC layer of the network node receives this indication, the physical layer or the MAC layer of the network node may not transmit the activation indication of the cell switch procedure to the UE.

Details described in all other embodiments of the present application (for example, details regarding TRP related beam failure detection and recovery procedures) are applicable for the embodiments of FIG. 6. Moreover, details described in the embodiments of FIG. 6 are applicable for all the embodiments of FIGS. 1-5 and 7.

The following texts describe specific Embodiments 3-5 of the methods as shown and illustrated in FIGS. 5 and 6. Embodiments 3-5 refer to a coexistence scenario of L1/L2 centric mobility and L3 mobility. According to Embodiments 3-5, a UE and a BS may perform following operations. The UE may be UE1 as shown and illustrated in FIG. 1.

Embodiment 3
(1) Step 1: A UE accesses a network, e.g., a PCell.
(2) Step 2: The network, e.g., the PCell, transmits configuration information to the UE.
   - A parameter of beam failure recovery per TRP may be configured for the UE.
   - A RRC configuration message for candidate cell(s) is associated with a cell change procedure based on activation signaling.
      - The UE is configured to support "Physical layer signaling-based activation for cell change" or "MAC layer signaling-based activation for cell change" or "condition-based activation for cell change".
      - If L1/L2 centric mobility is also included in a RRC Reconfiguration message with *reconfigurationWithSync* IE, one indication may be added to indicate that this mobility information can be applied after receiving L1/L2 related activation indication. This operation can distinguish the handover command between L1/L2 centric mobility and L3 mobility.
   - CHO configuration for candidate cell(s) may be configured to the UE. The candidate cell(s) associated with the CHO configuration may be the same as (or different from) the abovementioned candidate cell(s) associated with the RRC configuration message.
(3) Step 3: The UE receives the configuration information from the network, e.g., the PCell.
   - When receiving the RRC reconfiguration message in a RRC layer of the UE, the UE checks compliance upon receiving the RRC reconfiguration message associated with a cell change procedure based on activation signaling. If the UE is unable to comply with any part of the configuration included in the RRC reconfiguration message, the UE may report a failure of compliance check to the network. This operation defines the time of when to check compliance of the received RRC reconfiguration message associated with activation-based mobility.
(4) Step 4: The UE reports measurement result(s) including the physical layer and the RRC layer of the UE to the network.
(5) Step 5: The network, e.g., the PCell or the PSCell, transmits the activation indication associated with one candidate cell via a physical layer or a MAC layer. The content of L1/L2 signaling could be as follows.
   - Option 1: a PCID of the one candidate cell.
   - Option 2: a candidate cell index among all configured candidate cells.
      ▪ When a source BS (e.g., a gNB) transmits the configuration of the one candidate cell, the candidate cell index among all configured cells will be added.
(6) Step 6: The UE receives the activation indication associated with the one candidate cell via the physical layer or the MAC layer.
   - When receiving L1/L2 activation indication, the UE checks compliance upon the reception of the RRC reconfiguration message associated with a cell change procedure based on activation signaling. If the UE is unable to comply with any part of the configuration included in the RRC reconfiguration message, the UE reports the failure of compliance check to the network. This operation defines the time of when to check compliance of the received RRC reconfiguration message associated with activation-based mobility.
   - If CHO configuration is also configured, a lower layer of the UE needs to indicate to the RRC layer of the UE upon the reception of L1/L2 activation indication. Then, the RRC layer of the UE needs to stop evaluating CHO condition and not to trigger the CHO procedure after receiving an indication of the lower layer of the UE. This operation defines the content of L1/L2 signaling and defines the time of when the UE receives L1/L2 signaling for switching, and whether to indicate to the RRC layer of the UE.
   - In a case that both configuration of L1/L2 centric mobility and the CHO procedure are configured, when the UE receives the activation indication via L1/L2 and the CHO condition is met at the same time, any of following criteria in Options 1 and 2 can be used.
      ▪ Option 1: The configuration of L1/L2 centric mobility should be performed in priority.
      ▪ Option 2: the UE selects the candidate cell with the best channel quality for handover.
(7) Step 7: The UE performs a cell change procedure.

Embodiment 4
(1) Step 1: A UE accesses a network, e.g., a PCell.
(2) Step 2: The network, e.g., the PCell, transmits the configuration to the UE.
   - The parameter of beam failure recovery per TRP may be configured.
   - A RRC configuration message for candidate cell(s) is associated with a cell change procedure based on activation signaling.
      - The UE is configured to support "Physical layer signaling-based activation for cell change" or "MAC layer signaling-based activation for cell change" or "condition-based activation for cell change".
      - If L1/L2 centric mobility is also included in a RRC Reconfiguration message with *reconfigurationWithSync* IE, one indication may be added to indicate that this mobility information can be applied after receiving L1/L2 related activation indication. This operation can distinguish the handover command between L1/L2 centric mobility and L3 mobility.
      - CHO configuration for candidate cell(s) may be configured to the UE. This candidate cell(s) may be the same as (or different from) the abovementioned candidate cell(s) associated with the RRC configuration message.
(3) Step 3: The UE receives the configuration from the network, e.g., the PCell.
   - When receiving the RRC reconfiguration message in a RRC layer of the UE, the UE checks compliance upon the reception of the RRC reconfiguration message associated with a cell change procedure based on activation signaling. If the UE is unable to comply with any part of the configuration included in the RRC reconfiguration message, the UE may report a failure of compliance check to the network. This operation defines the time of when to check compliance of the received RRC reconfiguration message associated with activation-based mobility.
(4) Step 4: The UE reports measurement result(s) including the physical layer and the RRC layer of the UE to the network.
(5) Step 5: For the case of the candidate cell(s) associated with a cell change procedure based on activation signaling, the UE evaluates the condition. If the condition associated with one candidate cell is met, the UE performs a cell change procedure based on a lower layer condition.
   - If CHO configuration is also configured, the lower layer of the UE needs to indicate to a RRC layer of the UE once the lower layer condition of the cell change procedure is met. Then, the RRC layer of the UE needs to stop evaluating the CHO condition and not to trigger a CHO procedure after receiving an indication from the lower layer.
   - In a case that both configuration of L1/L2 condition based mobility and CHO are configured, when L1/L2 condition for cell change is met and a CHO condition is met at the same time, any of following criteria can be used.
      ▪ Option 1: The configuration of L1/L2 centric mobility should be performed in priority.
      ▪ Option 2: the UE selects the candidate cell with the best channel quality for handover.
(6) Step 6: The UE performs a cell change procedure.

Embodiment 5
(1) Step 1: A UE accesses the network, e.g., a PCell.
(2) Step 2: The network, e.g., the PCell, transmits the configuration to the UE.
   - The parameter of beam failure recovery per TRP may be configured to the UE.
   - A RRC configuration message for candidate cell(s) is associated with a cell change procedure based on activation signaling.
   - The UE is configured to support "Physical layer signaling-based activation for cell change" or "MAC layer signaling-based activation for cell change" or "condition-based activation for cell change".
      - If L1/L2 centric mobility is also included in a RRC Reconfiguration message with *reconfigurationWithSync* IE, one indication may be added to indicate that this mobility information can be applied after receiving L1/L2 activation indication.
(3) Step 3: The UE receives the configuration from the network, e.g., the PCell.
   - When receiving the RRC reconfiguration message in a RRC layer of the UE, the UE checks compliance upon the reception of the RRC reconfiguration message associated with a cell change procedure based on activation signaling. If the UE is unable to comply with any part of the configuration included in the RRC reconfiguration, the UE reports the failure of compliance check to the network.
(4) Step 4: The UE reports measurement result(s) including the physical layer and the RRC layer to the network.
(5) Step 5: The network, e.g., the PCell, transmits a DAPS handover command to the UE.
   - A RRC layer of the network, e.g., the PCell, informs the physical layer or MAC layer of the network that the DAPS handover command has been transmitted. Then, the physical layer or the MAC layer of the network will not transmit an activation indication of the cell switch procedure to the UE.
(6) Step 6: The UE receives the DAPS handover command and performs a DAPS handover procedure.
   - A RRC layer of the UE needs to inform a lower layer of the UE. Then, the lower layer stops the evaluation of condition. Optionally, the UE can continue to evaluate the condition, but he UE will not trigger a condition-based switch procedure even the condition is met. This operation defines the time of when the UE performs a DAPS handover procedure and whether the RRC layer of the UE needs to indicate to the MAC layer or the physical layer of the UE.

FIG. 7 illustrates an exemplary block diagram of an apparatus according to some embodiments of the present application. As shown in FIG. 7, the apparatus 700 may include at least one processor 704 and at least one transceiver 702 coupled to the processor 704. The apparatus 700 may be a UE or a network node (e.g., a BS).

Although in this figure, elements such as the at least one transceiver 702 and processor 704 are described in the singular, the plural is contemplated unless a limitation to the singular is explicitly stated. In some embodiments of the present application, the transceiver 702 may be divided into two devices, such as a receiving circuitry and a transmitting circuitry. In some embodiments of the present application, the apparatus 700 may further include an input device, a memory, and/or other components.

In some embodiments of the present application, the apparatus 700 may be a UE. The transceiver 702 in the UE may be configured to receive, from a serving cell, configuration information related to two or more TRPs of the serving cell. The processor 704 may be configured to detect a beam failure of a TRP within the two or more TRPs. The transceiver 702 in the UE may be further configured to transmit a BFR request, wherein the BFR request includes information related to the TRP. The processor 704 may be further configured: to detect a further beam failure of a further TRP within the two or more TRPs before receiving a response for the BFR request from the serving cell and to monitor a PDCCH within a period.

In some embodiments of the present application, the apparatus 700 may be a UE. The transceiver 702 in the UE may be configured: to receive, from a serving cell, configuration information of a cell switch procedure related to one or more candidate cells, wherein the cell switch procedure is performed based on that a cell switch condition of the cell switch procedure is met or an activation indication of the cell switch procedure is received; and to receive, via the wireless transceiver from the serving cell, one of: a normal handover command; a DAPS handover command; and configuration information regarding a CHO procedure.

In some embodiments of the present application, the apparatus 700 may be a network node (e.g., a BS). The transceiver 702 in the network node may be configured: to transmit, to a UE, configuration information of a cell switch procedure related to one or more candidate cells, wherein the cell switch procedure is performed based on that a cell switch condition of the cell switch procedure is met or an activation indication of the cell switch procedure is received; and to transmit, via the wireless transceiver to the UE, one of: a normal handover command; a DAPS handover command; and configuration information regarding a CHO procedure.

In some embodiments of the present application, the apparatus 700 may further include at least one non-transitory computer-readable medium. In some embodiments of the present disclosure, the non-transitory computer-readable medium may have stored thereon computer-executable instructions to cause a processor to implement the method with respect to a UE or a network node (e.g., a BS) as described above. For example, the computer-executable instructions, when executed, cause the processor 704 interacting with transceiver 702, so as to perform operations of the methods, e.g., as described in view of any of FIGS. 4-6.

While this disclosure has been described with specific embodiments thereof, it is evident that many alternatives, modifications, and variations may be apparent to those skilled in the art. For example, various components of the embodiments may be interchanged, added, or substituted in the other embodiments. Also, all of the elements of each figure are not necessary for operation of the disclosed embodiments. For example, those having ordinary skills in the art would be enabled to make and use the teachings of the disclosure by simply employing the elements of the independent claims. Accordingly, embodiments of the disclosure as set forth herein are intended to be illustrative, not limiting. Various changes may be made without departing from the spirit and scope of the disclosure.

In this document, the terms "includes," "including," or any other variation thereof, are intended to cover a non-exclusive inclusion, such that a process, method, article, or apparatus that includes a list of elements does not include only those elements but may include other elements not expressly listed or inherent to such process, method, article, or apparatus. An element proceeded by "a," "an," or the like does not, without more constraints, preclude the existence of additional identical elements in the process, method, article, or apparatus that includes the element. Also, the term "another" is defined as at least a second or more. The term "having" and the like, as used herein, are defined as "including.

Further aspects of the disclosure are provided by the subject matter of the following numbered clauses:
Clause 1. A method performed by a user equipment (UE), comprising: receiving, from a serving cell, configuration information related to two or more transmission reception points (TRPs) of the serving cell; detecting a first beam failure of a first TRP within the two or more TRPs; transmitting a first beam failure recovery (BFR) request, wherein the first BFR request includes information related to the first TRP; before receiving a response for the first BFR request from the serving cell, detecting a second beam failure of a second TRP within the two or more TRPs; and monitoring a physical downlink control channel (PDCCH) within a period.
Clause 2. The method of Clause 1, further comprising: in response to ending of the period, performing a random access channel (RACH) procedure.
Clause 3. The method of Clause 2, wherein the RACH procedure is based on configuration information related to a BFR procedure for the serving cell.
Clause 4. The method of Clause 1, wherein: the period is associated with a time window in a time domain, wherein the time window starts upon transmitting the first BFR request or the second BFR request, and wherein the length of the time window is configured by the serving cell; or the period is associated with a timer, the period starts in response to starting of the timer, and the period ends in response to an expiry of the timer or stopping of the timer.
Clause 5. The method of Clause 4, wherein the timer starts in response to: transmitting the first BFR request, and detecting the second beam failure; or transmitting the first BFR request; or detecting the second beam failure, and transmitting the second BFR request.
Clause 6. The method of Clause 4, further comprising stopping the timer in response to: receiving the response for the first BFR request from the serving cell; or receiving a response for a second BFR request from the serving cell.
Clause 7. A method performed by a user equipment (UE), comprising: receiving, from a serving cell, configuration information of a cell switch procedure related to one or more candidate cells, wherein the cell switch procedure is performed based on that a cell switch condition of the cell switch procedure is met or an activation indication of the cell switch procedure is received; and receiving, from the serving cell, one of: a normal handover command; a dual active protocol stack (DAPS) handover command; and configuration information regarding a conditional handover (CHO) procedure.
Clause 8. The method of Clause 7, further comprising: receiving, by a physical layer or a medium access control (MAC) layer of the UE, the activation indication from the serving cell, wherein the activation indication includes: a physical layer identifier (PCID) of a candidate cell within the one or more candidate cells; or an index of the candidate cell, wherein the index is associated with the PCID of the candidate cell or a cell global identifier (CGI) of the candidate cell.
Clause 9. The method of Clause 8, further comprising: in response to receiving the activation indication by the physical layer or the MAC layer of the UE and in response to receiving the configuration information regarding the CHO procedure, indicating, by the physical layer or the MAC layer of the UE, the activation indication to a RRC layer of the UE.
Clause 10. The method of Clause 9, further comprising: in response to receiving, by the RRC layer of the UE, the activation indication from the physical layer or the MAC layer of the UE: stopping, by the RRC layer of the UE, an evaluation of the condition of the CHO procedure and not triggering the CHO procedure; or in response to meeting the condition of the CHO procedure: performing the cell switch procedure in priority; or selecting a candidate cell with a best channel quality from the cell switch procedure and the CHO procedure for cell switch.
Clause 11. The method of Clause 7, further comprising: receiving a radio resource control (RRC) reconfiguration message from the serving cell, wherein the RRC reconfiguration message includes an indication to indicate that the RRC reconfiguration message can be applied after a physical layer or a MAC layer of the UE receives the activation indication from the serving cell.
Clause 12. The method of Clause 11, further comprising: in response to receiving the RRC reconfiguration message, checking compliance of the received RRC reconfiguration message.
Clause 13. The method of Clause 12, further comprising: in response to the RRC layer of the UE not compliant with the RRC reconfiguration message, reporting a compliance failure to the serving cell.
Clause 14. A user equipment (UE), comprising: a processor; and a wireless transceiver coupled to the processor, wherein the processor is configured: to receive, via the wireless transceiver from a serving cell, configuration information related to two or more transmission reception points (TRPs) of the serving cell; to detect a first beam failure of a first TRP within the two or more TRPs; and to transmit a first beam failure recovery (BFR) request via the wireless transceiver, wherein the first BFR request includes information related to the first TRP; to detect a second beam failure of a second TRP within the two or more TRPs before receiving a response for the first BFR request from the serving cell; and to monitor a physical downlink control channel (PDCCH) within a period.
Clause 15. A user equipment (UE), comprising: a processor; and a wireless transceiver coupled to the processor, wherein the processor is configured: to receive, via the wireless transceiver from a serving cell, configuration information of a cell switch procedure related to one or more candidate cells, wherein the cell switch procedure is performed based on that a cell switch condition of the cell switch procedure is met or an activation indication of the cell switch procedure is received; to receive, via the wireless transceiver from the serving cell, one of: a normal handover command; a dual active protocol stack (DAPS) handover command; and configuration information regarding a conditional handover (CHO) procedure.

## Claims

1. A method performed by a user equipment (UE), comprising:
receiving, from a serving cell, configuration information of a cell switch procedure related to one or more candidate cells, wherein the cell switch procedure is performed based on that a cell switch condition of the cell switch procedure is met or an activation indication of the cell switch procedure is received; and
receiving, from the serving cell, one of:
a normal handover command;
a dual active protocol stack (DAPS) handover command; and
configuration information regarding a conditional handover (CHO) procedure.

2. The method of Claim 1, further comprising:
receiving, by a physical layer or a medium access control (MAC) layer of the UE, the activation indication from the serving cell, wherein the activation indication includes:
a physical layer identifier (PCID) of a candidate cell within the one or more candidate cells; or
an index of the candidate cell, wherein the index is associated with the PCID of the candidate cell or a cell global identifier (CGI) of the candidate cell.

3. The method of Claim 2, further comprising:
in response to receiving the activation indication by the physical layer or the MAC layer of the UE and in response to receiving the configuration information regarding the CHO procedure, indicating, by the physical layer or the MAC layer of the UE, the activation indication to a RRC layer of the UE.

4. The method of Claim 3, further comprising:
in response to receiving, by the RRC layer of the UE, the activation indication from the physical layer or the MAC layer of the UE:
stopping, by the RRC layer of the UE, an evaluation of the condition of the CHO procedure and not triggering the CHO procedure; or
in response to meeting the condition of the CHO procedure:
performing the cell switch procedure in priority; or
selecting a candidate cell with a best channel quality from the cell switch procedure and the CHO procedure for cell switch.

5. The method of Claim 1, further comprising:
receiving a radio resource control (RRC) reconfiguration message from the serving cell, wherein the RRC reconfiguration message includes an indication to indicate that the RRC reconfiguration message can be applied after a physical layer or a MAC layer of the UE receives the activation indication from the serving cell.

6. The method of Claim 5, further comprising:
in response to receiving the RRC reconfiguration message, checking compliance of the received RRC reconfiguration message.

7. The method of Claim 6, further comprising:
in response to the RRC layer of the UE not compliant with the RRC reconfiguration message, reporting a compliance failure to the serving cell.

8. A user equipment (UE), comprising:
a processor; and
a wireless transceiver coupled to the processor,
wherein the processor is configured:
to receive, via the wireless transceiver from a serving cell, configuration information of a cell switch procedure related to one or more candidate cells, wherein the cell switch procedure is performed based on that a cell switch condition of the cell switch procedure is met or an activation indication of the cell switch procedure is received;
to receive, via the wireless transceiver from the serving cell, one of:
a normal handover command;
a dual active protocol stack (DAPS) handover command; and
configuration information regarding a conditional handover (CHO) procedure.

9. A network node, comprising:
a processor; and
a wireless transceiver coupled to the processor;
wherein the processor is configured:
to transmit, via the wireless transceiver to a user equipment (UE), configuration information of a cell switch procedure related to one or more candidate cells, wherein the cell switch procedure is performed based on that a cell switch condition of the cell switch procedure is met or an activation indication of the cell switch procedure is received; and
to transmit, via the wireless transceiver to the UE, one of:
a normal handover command;
a dual active protocol stack (DAPS) handover command; and
configuration information regarding a conditional handover (CHO) procedure.

10. A method performed by a network node, comprising:
transmitting, to a user equipment (UE), configuration information of a cell switch procedure related to one or more candidate cells, wherein the cell switch procedure is performed based on that a cell switch condition of the cell switch procedure is met or an activation indication of the cell switch procedure is received; and
transmitting, to the UE, one of:
a normal handover command;
a dual active protocol stack (DAPS) handover command; and
configuration information regarding a conditional handover (CHO) procedure.
